Europäisches Patentamt

European Patent Office

Office européen des brevets

(19)

(11) Publication number: **0 427 945 A2**

# EUROPEAN PATENT APPLICATION

(12)

(21) Application number: 90118877.1

(22) Date of filing: 02.10.90

(51) Int. Cl.⁵: **A47J 27/10, A47J 27/08**

(30) Priority: 17.10.89 JP 121992/89 U
09.11.89 JP 130932/89 U
01.12.89 JP 140175/89 U
16.06.90 JP 158319/90
25.07.90 JP 198159/90

(43) Date of publication of application:
**22.05.91 Bulletin 91/21**

(84) Designated Contracting States:
**AT BE CH DE DK ES FR GB GR IT LI LU NL SE**

(71) Applicant: **KABUSHIKI KAISHA OSAKA LUNCH**
**11-12, Nishinakajima 6-chome, Yodogawa-ku**
**Osaka-shi, Osaka-fu(JP)**

(72) Inventor: **Takeda, Teruhiko**
**8-24, Uenohigashi 3-chome**
**Toyonaka-shi, Osaka-fu(JP)**

(74) Representative: **TER MEER - MÜLLER -**
**STEINMEISTER & PARTNER**
**Mauerkircherstrasse 45**
**W-8000 München 80(DE)**

(54) **Cooking utensil.**

(57) A cooking utensil includes a pan or pot (1), a tray (2) put thereon supported at the periphery thereof, an upper lid (4) covering the space over the tray (2). The tray has steam passing holes (1a) in the vicinity of upper edge part of side wall thereof or between itself and the concave part of the inner side upper edge part of the pan or pot. The cooking utensil is used as a casserole for cooking noodles, a stew or the like or for baking some foodstuffs by using the pan only. In addition, the utensil is used as a steamer for heating up foodstuffs to be steamed such as a shao-mai. In this case, the tray with the foodstuffs put thereon is put in the pan or inner pot and the upper lid is put thereon and then they are heated up. Then, steam of the water in the pan or inner pot enters the space between the tray and the upper lid through the steam passing holes, whereby the foodstuffs on the tray can be heated up by dry steam. Furthermore, it can be used for easily heating up already processed or cooked food such as a hamburger steak.

FIG.3

EP 0 427 945 A2

## COOKING UTENSIL

### FIELD OF THE INVENTION

The present invention relates to a cooking utensil for cooking a cooking material by heat and, more particularly, to a cooking utensil for cooking the cooking material by steam heating.

### BACKGROUND OF THE INVENTION

Conventionally, a cooking utensil that can easily cook a cooking material such as noodles or processed foodstuffs by heating those for a short time has been desired and used for lunch for field workers or the like. Of course, not limited to these use, such a cooking utensil has an extensive field of use such as for lunch for people attending some events such as an athletic meeting, or for easy meals for people such as boarding students or bachelors, or as a heater for dishes or the like in such as restaurants.

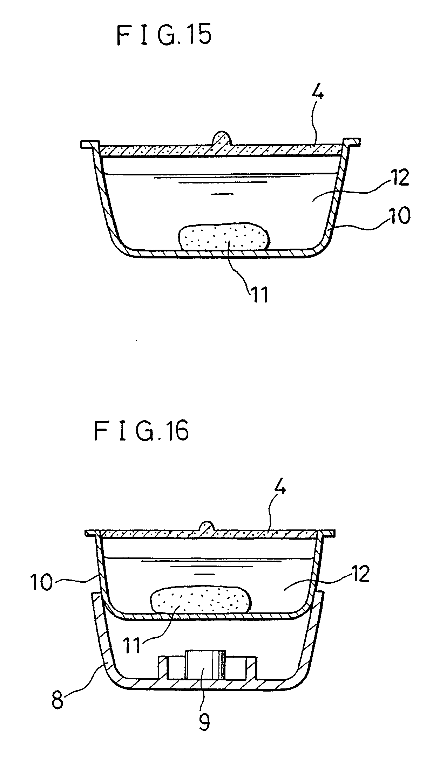

Figure 15 is a view showing a structure of such a conventional cooking utensil. In figure 15, reference numeral 10 designates a pan made of thin aluminum, reference numeral 4 designates a lid covering an opening of the pan 10 and reference numerals 11 and 12 designate cooking materials of solid type and liquid type, respectively.

This cooking utensil is used as follows. That is, as shown in figure 16, the cooking materials 11 and 12 to be cooked, such as noodles and water or broth are put in the pan 10 and the pan 10 is put on a simple heater 8 having a solid fuel 9 and then heated up, whereby the cooking materials 11 and 12 are cooked by heat.

According to the conventional cooking utensil, although it can be used as a casserole for cooking noodles or a stew, it is not capable of cooking foodstuffs to be steamed such as a shao-mai nor heating up processed or frozen foods by steam.

### SUMMARY OF THE INVENTION

The present invention was made to solve the above problems and it is an object of the present invention to provide a cooking utensil capable of being used as a casserole for cooking noodles or a stew and also as a steamer for cooking shao-main or the like or for heating up processed foodstuffs.

Other objects and advantages of the present invention will become apparent from the detailed description given hereinafter; it should be understood, however, that the detailed description and specific embodiment are given by way of illustration only, since various changes and modifications within the spirit and scope of the invention will become apparent to those skilled in the art from this detailed description.

A cooking utensil in accordance with a first one of the present invention comprises a pan having a plurality of concave parts formed at the inner side upper edge part of its side wall, a tray put in the pan such that the outer surface of upper edge part of the tray is in contact with the inner side upper edge part of the side wall of the pan and steam passing holes is formed between the tray and the pan only at the plurality of concave parts of the pan, an upper lid put on the outer peripheral part extending outward from the upper edge part of the pan so as to cover the space over the pan, and water in the pan being boiled by heat from the pan and thus generated steam from water being introduced into the space between the tray and the upper lid through the steam passing holes between the pan and the tray, whereby a cooking material on the tray is cooked by dry steam.

In addition, a cooking utensil in accordance with a second one of the present invention comprises a pan, a, tray having at least two steam passing holes at its side wall in the vicinity of the upper edge part thereof or at its outer peripheral part extending outward from the upper edge part, the tray being placed on the pan so that its outer peripheral part is in contact with the inner wall of the pan in the vicinity of its upper end contour thereof, an upper lid covering the space over the pan, and water in the pan being boiled by heat from the pan and thus generated steam from water being introduced into the space between the tray and the upper lid through the steam passing holes of the tray, whereby a cooking material on the tray is cooked by dry steam.

In addition, a cooking utensil in accordance with a third one of the present invention comprises a pot having a heater material buried in its bottom and a tray putting part at its upper contour part, a tray having at least two steam passing holes at the side wall in the vicinity of upper edge part of its side wall, the tray being placed on the pan so that its outer peripheral part extending outward from the upper edge part is in contact with the tray putting part of the pot, an upper lid covering the space over the pot, and water in the pot being boiled by heat from the heater material and thus generated steam from water being introduced into the space between the tray and the upper lid through the steam passing holes of the tray, whereby a cooking material on the tray is cooked by steam heating.

In addition, a cooking utensil in accordance with a fourth one of the present invention comprises a pot having a heater material buried in its bottom, a tray putting part at its upper contour part, and a plurality of concave parts formed at the inner side upper edge part of its side wall, a tray put in the pot so that its outer peripheral part extending outward from the upper edge part of its side wall is in contact with the tray putting part of pot, the outer surface of the outer peripheral part is in contact with the inner side upper edge part of the side wall of the pot, and steam passing holes are formed between the tray and the pot only at the plurality of concave parts of the pot, an upper lid covering the upper space of the tray and the pot, and water in the pot being boiled by heat from the heater material and thus generated steam from water being introduced into the space between the tray and the upper lid through the steam passing holes formed between the pot and the tray, whereby a cooking material on the tray is cooked by dry steam.

In addition, according to a cooking utensil in accordance with the present invention, an outer peripheral part extending outward from the upper edge part of the tray comprises an internal peripheral part and an external peripheral part, the external peripheral part has a step part with relative to the internal peripheral part to be lower than the inner part, the external part has at least two holes, the upper lid is placed on the outer peripheral part of the tray so that waterdrops generated and attached onto the inner surface of the upper lid during heating for cooking fall along the internal surface of the upper lid and fall from the holes of the outer peripheral part down to the space outside the tray and inside the pot.

As described above, according to the first to fourth ones of the present invention, the cooking utensil is used as a casserole for cooking noodles, a stew or the like or for baking some foodstuffs by using the pan only. In addition, the utensil is used as a steamer for heating up foodstuffs to be steamed such as a shao-mai. In this case, the tray with the foodstuffs put thereon is put in the pan or inner pot and the upper lid is put thereon and then they are heated up. Then, steam of the water in the pan or inner pot enters the space between the tray and the upper lid through the steam passing holes, whereby the foodstuffs on the tray can be heated up by dry steam. Furthermore, it can be used for easily heating up already processed or cooked foods such as a hamburger steak.

In addition, according to the cooking utensil in which the outer peripheral part extending from the upper edge part of the tray comprises the internal peripheral part and the external peripheral part having a step part with relative to the former to be lower than the former and the upper lid is put on the outer peripheral part of the tray, so that waterdrops generated and attached onto the inner surface of the upper lid when cooking materials on the tray is heated up by steam, fall along the internal surface of the upper lid and fall from the holes of the outer peripheral part down to the space outside the tray and inside the pot, therefore it is prevented that waterdrops are attached to the cooking material during or after cooking so that color or appearance of the cooking material is not spoiled. In addition, since the generated steam becomes water and falls into the inner pot again, water does not immediately evaporate to be lost, so that the cooking material is prevented from being burned

## BRIEF DESCRIPTION OF THE DRAWINGS

Figure 1 is a broken perspective view showing a structure of a cooking utensil in accordance with a first embodiment of the present invention;
Figure 2 is a sectional view showing the cooking utensil shown in figure 1;
Figure 3 is a view showing a passage of steam of the cooking utensil shown in figure 1;
Figure 4 is a broken perspective view showing a structure of a cooking utensil in accordance with a second embodiment of the present invention;
Figure 5 is a sectional view showing the cooking utensil shown in figure 4;
Figure 6 is a view showing a passage of steam of the cooking utensil shown in figure 5;
Figure 7 is a view showing another example of a tray supporting member of the cooking utensil shown in figures 1 to 4;
Figure 8 is a broken perspective view showing a structure of a cooking utensil in accordance with a third embodiment of the present invention;
Figure 9 is a sectional view of the cooking utensil shown in figure 8;
Figure 10 is a view showing an electric heater serving as a part of the cooking utensil shown in figure 9;
Figure 11 is a view showing another example of a tray of the cooking utensil in accordance with the embodiments 1 to 3;
Figure 12 is a sectional view showing the cooking utensil having the tray shown in figure 11;
Figure 13 is a broken perspective view showing a structure of a cooking utensil in accordance with a fourth embodiment of the present invention;
Figure 14 is a sectional view showing the cooking utensil shown in figure 13;
Figures 15 and 16 are views each showing a conventional cooking utensil; and
Figure 17 is a view showing a structure of a conventional steamer.

## DETAILED DESCRIPTION OF THE PREFERRED EMBODIMENTS

An embodiment of the present invention will be described in detail in reference to the drawings hereinafter.

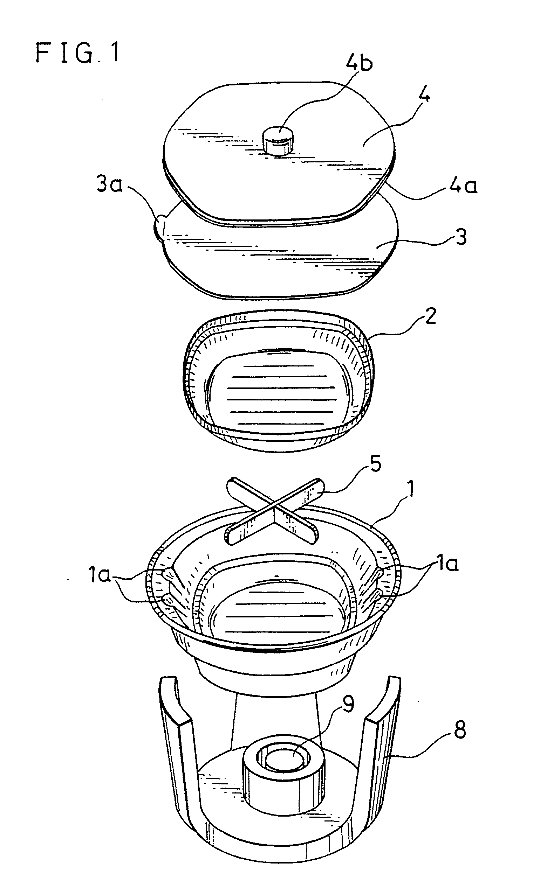

Figure 1 is a broken perspective view showing a structure of a cooking utensil in accordance with a first embodiment of the present invention.

In figure 1, reference numeral 1 designates a pan having concave parts 1a at its inner side upper edge part, which is made of thin aluminum, reference numeral 2 designates a tray having an outside diameter smaller than that of an inside diameter of the pan 1 so as to be arranged in the pan 1, the side of which is tapered, reference numeral 3 designates an inner lid made of thin aluminum plate and having a grip 3a integrally formed at a part of an outer periphery thereof and reference numeral 4 designates an upper lid made of urethane or the like on which thin aluminum film 4a is attached on its lower surface for heat insulation and a grip 4b is mounted thereon in the center of its upper surface. In addition, reference numeral 5 designates an almost cross-shaped tray supporting member arranged at a bottom of the pan 1 and supporting the tray 2 and reference numeral 11 designates a cooking material such as a shao-mai put on the tray 2. Thus, the cooking utensil in accordance with the embodiment of the present invention comprises the pan 1, the tray 2, the tray supporting member 5, the inner lid 3 and the upper lid 4.

Then, operation thereof will be described in detail hereinafter.

First, when this utensil is used as a casserole for cooking, for example noodles or a stew like a conventional example, the cooking material 11 and water or broth are put in the pan 1 set on a heater 8, the upper lid 4 is put thereon and then a solid fuel 9 is ignited to heat the pan 1 up for cooking. In this case, the tray 2 and the inner lid 3 are not used.

The, when this utensil is used as a steamer for cooking a material to be steamed such as a shao-mai or for heating processed or frozen foods by steam, the tray supporting member 5 is set at the bottom of the pan 1, little water 12 is poured until a predetermined position so that the bottom of the tray 2 may not be wet, the tray on which the cooking material 11 is put is set inside the pan 1, the inner lid 3 covers the pan 1 and then the upper lid 4 is put thereon. Thereafter, when the solid fuel 9 is ignited, steam is generated from the water 12 within about 1 minute and after about three minutes, the pan 1 is filled with dry steam which passed through steam passing holes 6a formed between the pan 1 and the tray 2. Then, heat generated by the wet steam under the tray 2 is also applied and then the pan is heated up at a high temperature of approximately 250° C. Thus, since the cooking material is heated up at 80 to 90° C after about five minutes, for example the shao-mai or the like is well steamed and a processed hamburger steak or frozen foods are well warmed up. In addition, fresh vegetables can be boiled. In these cases, since they are not directly heated up, there is no burn generated or they are not boiled down, so that its taste is not spoiled.

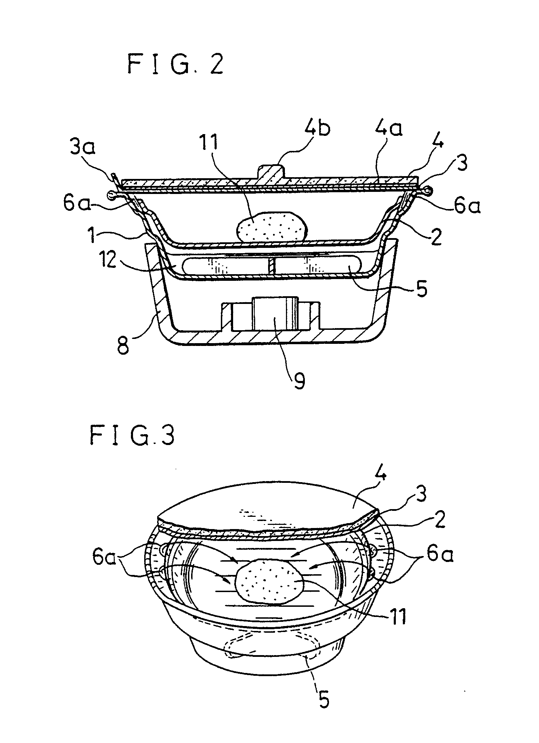

A heating mechanism in accordance with this embodiment will be described hereinafter. The steam generated by heat at the bottom of the pan 1 enters into the tray 2 through the steam passing holes 6a formed between the tray 2 and the pan 1 as shown in figure 3 to heat up the cooking material 11 on the tray 2. Since a part of the steam further enters the upper surface of the inner lid 3, the inner lid 3 and the tray 2 are put close together by the steam flowing at the upper and lower surfaces of the inner lid 3. Therefore, the space between the tray 2 and the inner lid 3 becomes an airtight state and then the steam will not go outside, with the result that extremely high heating force can be obtained.

Accordingly to this embodiment of the present invention, as shown in figure 1, since side walls of the pan 1 and the tray 2 are not vertical but inclined to some degree (for example, 10 to 20 degrees) to their surfaces, the generated steam also effectively rises through the space between the tray 2 and the pan 1 and reaches in the vicinity of the steam passing holes 6a. Since the steam in the vicinity of the steam passing holes 6a is dry, the steam introduced from the steam passing holes 6a into the tray 2 is dry steam, with the result that the cooking material can be effectively heated up from an upper part.

Next, advantages of the cooking utensil in accordance with this embodiment will be described hereinafter as compared with the conventional steamer.

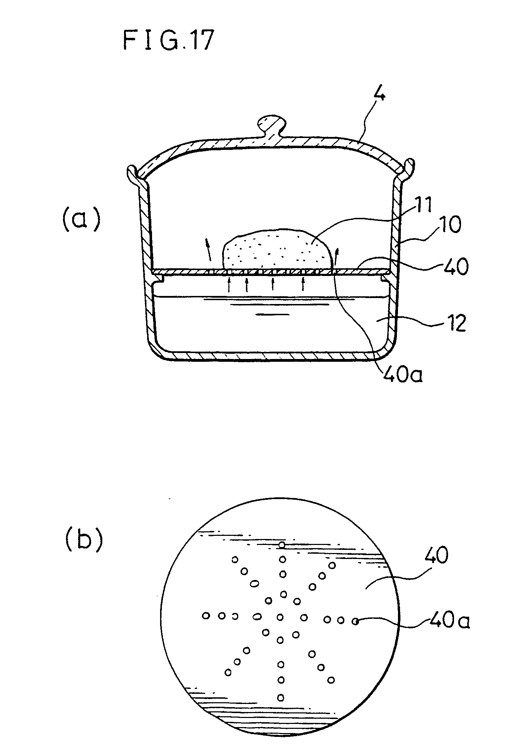

Figure 17(a) to (b) each show a structure of the conventional steamer.

Referring to figure 17(a), water 12 is poured in a pan 10 and a middle plate 40 (shown in figure 17(b)) having a plurality of holes 40a is set in the pan 10, a cooking material 11 is put on the middle plate 40 and then, a lid 4 is put thereon. Then, when the pan is heated up from a lower part, steam enters the space between the middle plate 40 and the lid 4 through the holes 40a and then the cooking material 11 on the middle plate 40 is steamed. Accordingly to this structure, since the cooking material 11 is heated up from the lower part by wet steam entering from the holes 40a of the middle plate 40, if the cooking material is left as it is for a while after heating is stopped, it becomes watery or clammy in an extreme case due to steam entering from the holes 40a, which spoils its taste or appearance. In addition, since the middle plate 40 has holes 40a, the cooking material can not be cooked with soup, so that kinds of the cooking material 11 capable of being cooked is limited to some degree.

Meanwhile, according to this embodiment, the steam passing holes 6a are not formed at the bottom of the tray 2 but provided in the vicinity of the upper edge part of the tray 2 so that dry steam is introduced into the tray through them. As a result, even if the foodstuffs are left as it is for a while after heating is stopped, they do not become watery nor clammy because the raw steam (which is different from dry steam and is generated by only heating water at such a temperature that boiling does not occur) is not likely to enter the tray. Thus, the taste just after cooking can be preserved for a long time. In addition, since there are no hole provided at the bottom of the tray unlike the conventional example, the cooking material can be cooked with soup, so that the kind of the cooking materials capable of being cooked by the utensil is largely increased.

In addition, the tray supporting member has the function of preventing the cooking material 11 from being soaked in water when the tray 2 is bent because of the heavy material. Thus, the tray 2 can be stably set in the pan 1.

In addition, after cooking, the upper lid can be opened only by holding grip 4b and the inner lid 3 is lifted by holding a grip part 3a provided at one part of the outer periphery thereof, so that there is no fear of a burn for cooking.

As described above, the cooking utensil in accordance with the embodiment of the present invention can be used as a casserole in which noodles, a stew or the like is cooked, by using the pan 1 and the outer lid 4. In addition, the pan 1 can be used as a frying pan in which a fish or vegetables are baked or fried.

Furthermore, the utensil can be used as a steamer in which a cooking material to be steamed such as a shao-mai or the like can be steamed. In this case, the tray supporting member 5 is set in the pan 1, a little water is put therein, the tray 2 and the inner lid 3 are set, the cooking material is put on the tray 2 and then it is heated up.

In addition, according to the above structure, a processed hamburger steak, frozen foods or the like can be easily heated up by dry steam. Since the cooking material can be heated up at a high temperature of 80 to 90°C, the material can be cooked in a germ-free condition, which is preferable for reasons of sanitation. In addition, as another usage, for example an egg is cracked and other usage, for example an egg is cracked and put on the tray 2 and then heated up by dry steam, whereby a fried egg without any burn can be easily made. As further usage, fresh spinach is put on the tray 2 and heated up by dry steam, whereby it can be easily cooked with a good color.

In addition, since the cooking utensil in accordance with this embodiment of the present invention heats the foodstuffs up by dry steam, cell of such as fiber or starch, which could be destroyed by overheating by a microwave oven, does not die and cells in the food can be recovered to a fresh state, with the result that the cooking material can be heated up with a good color and taste.

In addition, since the cooking utensil in accordance with this embodiment of the present invention comprises the pan 1, the tray 2, the supporting member 5, the lids 3 and 4 which are made of aluminum which is inexpensive and light in weight, the utensil can be distributed as disposables. In this case, only the utensil may be supplied by a caterer at lunch time or the like, while the heater 8 and the solid fuel 9 are prepared by a user. Thus, field workers or the like can always have inexpensive and warm lunch at ease and also have fresh and healthy foods because an unprocessed or fresh material can be used. Furthermore, this cooking utensil can be used when meals are served to many people at the same time.

Although the pan 1 is made of inexpensive aluminum in the above embodiment, this may be made of iron, an aluminum alloy, a material to which vitreous enamel processing is applied, chinaware or the like in accordance with a purpose. In this case, the pan 1 and the upper lid 4 should be prepared in addition to the heater 8 and the solid fuel 9 so that only the tray on which processed foodstuffs are put and the inner lid 3 may be supplied by the caterer. Thus, people can always have inexpensive and warm lunch like the above embodiment.

After the meal, the tray 2 and the inner lid 3 are thrown away and the pan 1 and the upper lid 4 may not be washed because only little water is left in the pan 1 and the upper lid 4 is almost clean because of the inner lid 3. Thus, only simple cleaning is necessary.

In addition, although the upper lid 4 is put on the inner lid 3 during heating in the above embodiment, the upper lid 4 and the inner lid 3 are not always used together and only either one may be used depending on the foodstuffs to be cooked. When the inner lid 3 is not used, although the space between the upper lid and the tray is filled with steam, the steam is not leaked outside because of the weight of the upper lid, so that the space between the tray and the upper lid can be in the airtight state.

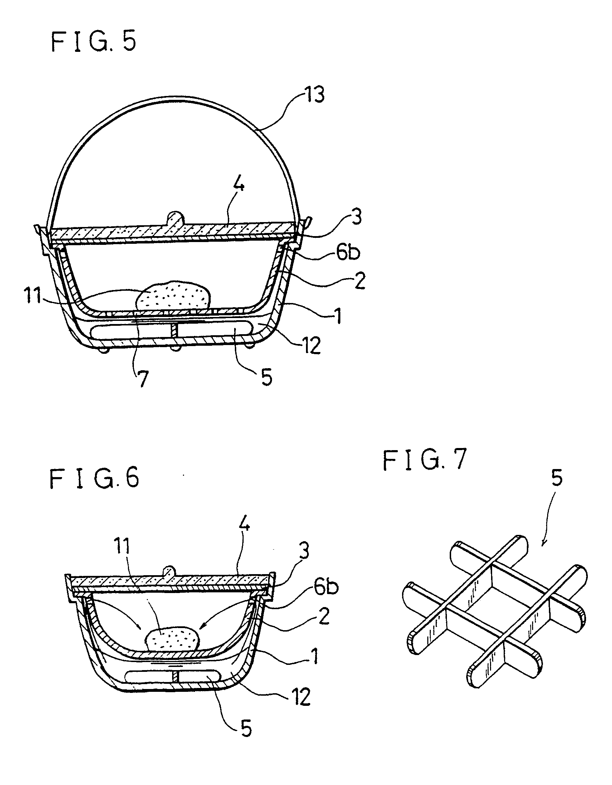

The tray supporting member 5 may have any configuration if it can support the tray. For example, it may be parallel crosses in shape as shown in figure 7.

Next, a second embodiment of the present invention will be described in detail hereinafter.

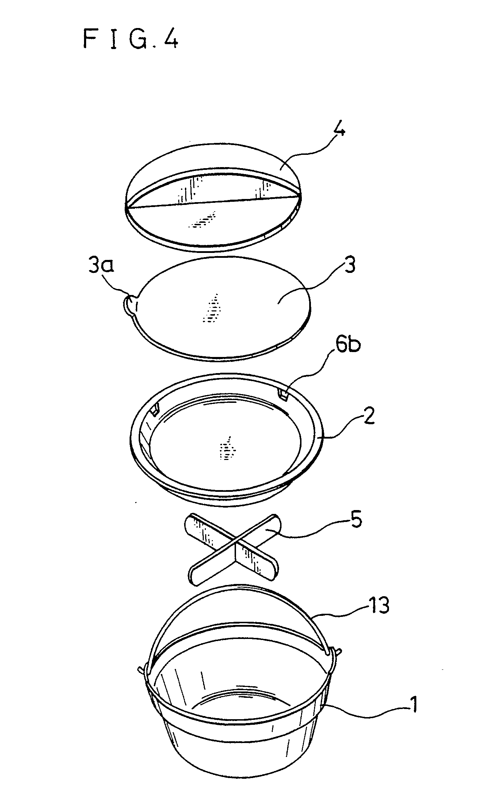

Figures 4 and 5 are a broken perspective view and a sectional view each showing a structure of a cooking utensil in accordance with the second embodiment of the present invention. In figures 4 and 5, reference numeral 1 designates a pan having a grip 13 at its upper part, which is made of a material such as iron, reference numeral 5 designates an almost cross-shaped tray supporting member arranged at a bottom of the pan 1, reference numeral 2 designates a tray arranged on the tray supporting member 5, which is made of aluminum or the like. The tray 2 has four steam passing holes 6b of a desired size arranged in the vicinity of upper edge part of its side wall at equal intervals. Reference numeral 3 designates an inner lid having a grip part 3a, which is made of thin aluminum or the like and reference numeral 4 designates an upper lid having a grip in the center of its upper surface, which is made of a material such as wood. In addition, reference numeral 12 designates water and reference numeral 11 designates a cooking material. This second embodiment is different from the first embodiment of the present invention in that the steam passing holes are provided in the vicinity of upper edge part of the side wall of the tray 2, while the concave parts 1a are formed at an inner side upper edge part of the pan 1 and steam is introduced into the tray through the steam passing holes 6a between by the concave parts 1a and the tray 2 in the first embodiment of the present invention.

A method for using the cooking utensil in accordance with the second embodiment of the present invention will be described hereinafter. Similar to the first embodiment, when this utensil is used as a casserole for cooking, for example noodles or a stew, the cooking material is put on the pan 1 and water or broth is poured therein, the upper lid 4 is put thereon and then they are heated up. When it is used as a steamer, first, water 12 is poured until a predetermined position so that the bottom of the pan 1 may not be wet, the tray 2 is set in the pan 1 so that it may be fixed at a step part of the pan 1, the cooking material 11 is put on the tray 2, the inner lid 3 is put on the tray 2, the upper lid 4 is further put thereon and then they are heated up. This method is completely the same as that in the first embodiment. Steam is generated in few minutes after heating starts and then dry steam enters the tray 2 through the steam passing holes 6b provided in the vicinity of the upper edge part of side wall of the tray 2 as shown in figure 6, whereby the cooking material 11 on the tray 2 is heated up. Since the inner lid 3 made of aluminum is put close to the tray 2 by the steam, the steam in the tray 2 is prevented from leaking outside. As a result, heating force is more increased.

Although the pan 1 is made of iron in the above embodiment, this may be of aluminum, an aluminum alloy, chinaware, or a material to which vitreous enamel processing is applied.

In addition, although the tray supporting member 5 is arranged under the tray 2 in the above embodiment, this may be dispensed with.

According to the second embodiment of the present invention, similar to the first embodiment of the present invention, since the tray 2, the supporting member 5, the inner lid 3 and the upper lid 4 other than the pan 1 or including the pan 1 of the cooking utensil are made of a material such as aluminum which is inexpensive and light in weight, they can be used as disposables. Therefore, if the pan 1 and the heating apparatus or only the heating apparatus is prepared on the user side and the other parts of the cooking utensil and the cooking material are only supplied by the caterer at lunch, the field workers or the like can have always warm lunch. In addition, since not dried or instant foods but frozen foods or fresh foodstuffs can be used as a material, fresh and healthy food without any food additive can be served.

Although the tray 2 has three steam passing holes 6b in the above embodiment of the present invention, the same effect can be obtained if there are at least two holes at symmetrical positions in the vicinity of upper edge part of side wall or an outer peripheral part of upper edge part of the tray 2.

In addition, similar to the first embodiment of the present invention, the tray supporting member 5 may be parallel crossed in shape or the like.

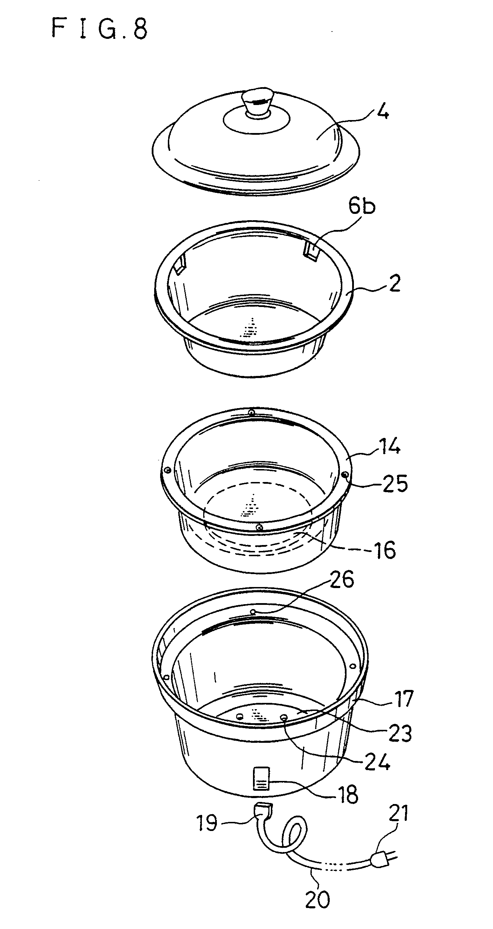

Figure 8 is a broken perspective view showing a structure of a cooking utensil in accordance with a third embodiment of the present invention. In figure 8, reference numeral 2 designates a tray, reference numeral 4 designates an upper lid made of a material such as transparent heat-resistance glass, reference numeral 6b designates a steam passing hole formed in the vicinity of upper edge part of side wall of the tray 2, reference numeral 14 designates an inner pot integrally formed with an electric heater 16 buried in a bottom thereof, reference numeral 17 designates an outer pot made of a heat insulating material. The inner pot 14 is fixed in the center of the outer pot 17 by a screw fastener 25 of the inner pot 14 and a screw fastener hole 26 of the outer pot. In addition, instead of the heat insulating material, a plate 23 having an effect of heat radiation is provided at a lower surface of the outer pot 17 which faces the electric heater and the plate 23 has a plurality of holes 24.

In addition, a jack 18 is attached to the side of the outer pot 17 to which a plug 19 is inserted. Reference numeral 20 designates a cord and reference numeral 21 designates a consent plug.

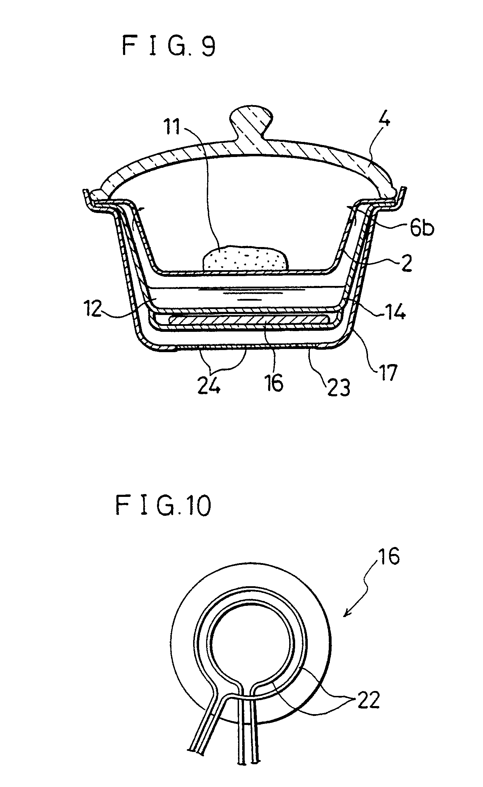

Figure 9 is a sectional view of figure 8 and figure 10 is a schematic view showing a structure of the electric heater 16. Reference numeral 11 designates a cooking material on the tray 2, reference numeral 12 designates water in the inner pot 14, reference numeral 23 designates a plate having an effect of heat radiation provided at a part of the bottom of the outer pot 17 and reference numeral 22 designates a loop-shaped heating wire.

According to the cooking utensil in accordance with this embodiment of the present invention, the inner pot 14 having the electric heater 16 buried in the bottom thereof is fixed in the outer pot 17 by the screw fastener 25, the water 12 is poured into the inner pot 14, the tray 2 on which the cooking material is put is set so that its outer peripheral part is put on the peripheral part extending the upper edge part of the inner pot 12, the upper lid 4 is put thereon, the water in the inner pot 14 is heated up by the heating wire 22 of the heating body 16 through which a current flows from an inlet on the outer pot 17 toward the heating wire 22 and then thus generated dry steam enters the space between the tray 2 and the upper lid 4 through the steam passing holes 6b of the tray 2 to heat the cooking material 11 on the tray 2 up for cooking. Since the outer pot 17 is made of the heat insulating material and the heat radiating plate 23 is provided at the bottom of the outer pot 17, it is not heated up during cooking so that it is easily handled.

Thus, the cooking material 11 such as frozen foods can be heated up by dry steam for a short time using the above cooking utensil. In this case, the cooking material 11 may be directly put on the tray 2 or the cooking material 11 such as frozen foods is put on a heat resisting dish first and then put on the tray 2 with the dish. In the latter case, it is not necessary to clean the tray 2.

In addition, as another usage, for example an egg is cracked and put on the tray 2 and then heated up by dry steam, whereby a fried egg without any burn can be easily made. As further usage, fresh spinach is put on the tray 2 and heated up by dry steam, whereby it can be easily cooked with a good color.

In addition, according to the cooking utensil in accordance with this embodiment, a plurality of holes are not provided at a bottom unlike the conventional steamer shown in figure 17. Therefore, even if the cooked foods are left as it is for a while after cooking, they do not become watery nor clammy, so that the taste or appearance thereof is not spoiled. As a result, the taste just after cooking can be preserved for a long time.

In addition, when the cooking utensil in accordance with the embodiment of the present invention is used as means for heating foodstuffs, since the foodstuffs are heated by dry steam, cells which could be destroyed by overheating by a microwave oven do not die and can be recovered to a fresh state, with the result that the foodstuffs can be heated up with good color and taste.

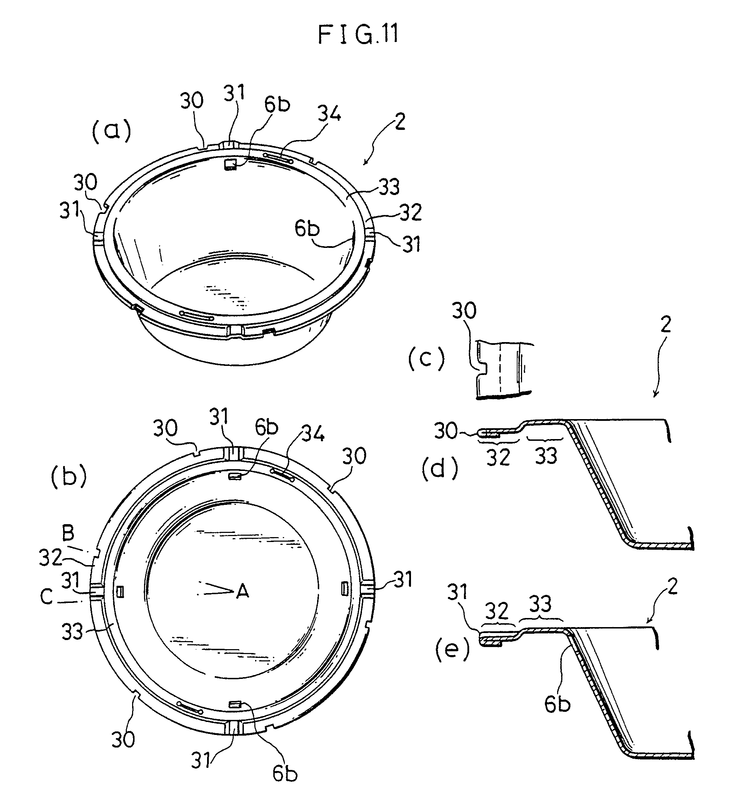

Figure 11 shows a structure of the tray 2 in accordance with the second and third embodiments of the present invention in detail, in which figure 11(a) is a perspective view thereof, figure 11(b) is a plan view thereof, figure 11(c) is an enlarged view showing a hole at an outer peripheral part of the tray, figure 11(d) is a sectional view taken along a line A - B in figure 11(b), and figure 11(e) is a sectional view taken along a line A - C in figure 11(b). In figure 11, reference numeral 6b designates a steam passing hole, reference numeral 32 designates an external peripheral part of the outer peripheral part extending from the upper edge part of the tray 2, reference numeral 33 designates an internal peripheral part of the outer peripheral part of upper edge part of the tray 2, reference numeral 30 designates a hole provided at six positions on the external peripheral edge part 32, reference numeral 31 designates a convex part formed at four positions on the external peripheral part 32 and reference numeral 34 designates a grip which is pulled out when it is used.

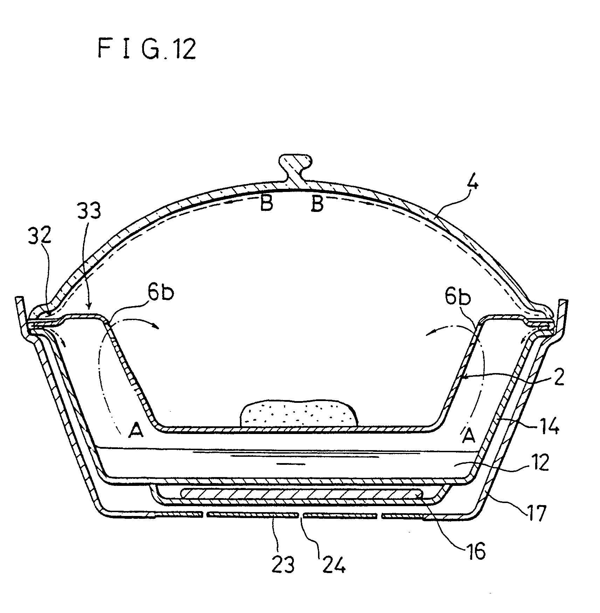

Figure 12 is a section view showing a cooking utensil having the above tray. In figure 12, the same reference as in figure 9 designate the same parts and reference character A designates a passage of dry stem and reference character B designates a passage of waterdrops generated and attached onto an inner surface of the upper lid 4.

First, a description will be given of the structure of this tray.

According to the tray 2, the outer peripheral part of upper edge part thereof comprises the internal peripheral part 33 and the external peripheral part 32 in which the external peripheral part 32 is formed lower than the internal peripheral part 33 and four convex parts 31 and six holes 30 are formed on the external peripheral part 32. In addition, the grips 34 which are pulled out when the tray is lifted are oppositely provided on the internal peripheral part. An edge of the upper lid 4 is put on the external peripheral part 32 of the tray as shown in figure 12, more specificically, on the convex parts 31 thereof so that it may be held at a position slightly higher than a surface of the external peripheral part 32.

According to this structure, among steam generated from boiled water 12, only dry steam enters the space between the tray and the upper lid 4 from the steam passing holes 6b as shown by A to heat up the cooking material on the tray. At this time, waterdrops on the upper lid 4 go along the inner surface of the upepr liud 4 as shown by B, reach the external peripheral part 32 of the tray 2 and then fall into water 12 in the inner pot 14 from the holes 30 on the external peripheral part 32 again.

Therefore, in this tray, since there are holes 30 provided on the external peripheral part 32 of the tray 2 so that waterdrops may fall, the cooking material is prevented from being wet by the waterdrops from the inner surface of the upper lid 4, with the result that the taste or appearance thereof is not spoiled.

In addition, since the generated steam becomes water and it falls into the inner pot again, water does not immediately evaporate, with the result that the cooking material is prevented from being burned.

Furthermore, since the concave parts 31 are formed on the external peripheral part 32 so that the upper lid is held at a position slightly higher than the surface of the external peripheral part 32, most waterdrops generated on the inner surface of the upper lid fall into the tray 2.

Furthermore, since the grips 34 are provided on the internal peripheral part 33 of the tray 2, the tray can be easily lifted using them after cooking, which is very convenient to handle the utensil after cooking.

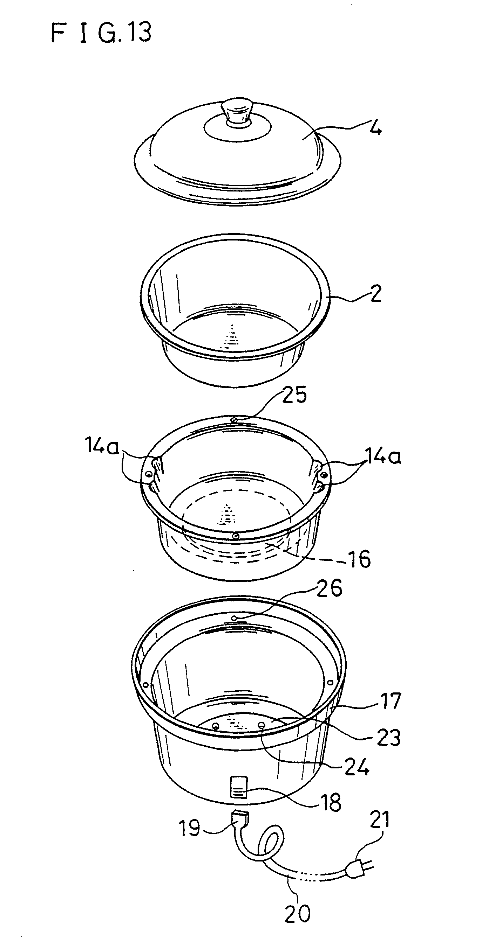

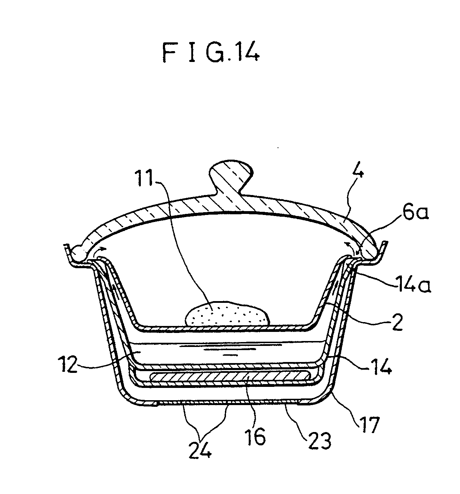

Figure 13 is a broken perspective view showing a structure of a cooking utensil in accordance with a fourth embodiment of the present invention and figure 14 is a sectional view of figure 13. In figures 13 and 14, the same references as in figure 8 designate the same parts and reference numeral 14a designates a concave part provided at an inner surface of upper edge part of the inner pot.

This embodiment of the present invention is different from the third embodiment in that the concave parts 14a are provided at the inner surface of upper edge part of the inner pot 14 and the steam is introduced into a tray through the steam passing holes 6a formed by the concave parts 14a and the tray 2, while the steam passing holes 6b are provided in the vicinity of the upper edge part of side wall of the tray in the third embodiment of the present invention. Other structures are the same as in the third embodiment.

According to the third and fourth embodiments of the present invention, the various kinds of foodstuffs can be heated up by steam like the first and second embodiments of the present invention. Meanwhile, the third and fourth embodiments are different from the first and second embodiments of the present invention in that electric heating means is provided. Thus, since fire is not used here, there is little risk of fire and safety is considerably improved. Furthermore, since it is not necessary to additionally prepare a heater or solid fuel, it is good in sanitary view point and also easy to handle.

When the tray 2 is not used, the cooking utensil can be used as a hot plate for baking a hot cake or as an electric pot for cooking a stew or the like. Therefore, the third and fourth embodiments of the present invention are of considerable utility value.

As described above, the cooking utensil in accordance with the present invention comprises a pan having a plurality of concave parts at its inner side edge part of its side wall, a tray put on the pan so that its outer surface of upper edge part is in contact with the inner side surface of the pan and steam passing holes may be formed between the concave parts of the pan and the tray. In this structure, when water in the pan is boiled by heat from the pan, dry steam is generated and it enters the space between the tray and the upper lid through the steam passing holes and then a cooking material on the tray is cooked by the dry steam. Thus, the cooking utensil is used as a casserole for cooking noodles or a stew by only using the pan. Alternatively, when the tray is put in the pan and then the lid is put thereon, it can be used as a steamer for cooking a material to be steamed such as a shao-mai or heating processed foods with a good color and taste.

Furthermore, since dry steam is introduced from the upper edge part of the tray into the tray in the present invention, the steam is not likely to enter the tray after heating is stopped. Therefore, even if the cooking material is left as it is after cooking for a while, waterdrops are not generated on them, with the result that its taste or appearance is not spoiled.

In addition, since the pan is made of aluminum or the like which is inexpensive, it is disposable. Therefore, if a user provides the heater and a caterer supplies the pan and the tray at lunch, the user can always have fresh, warm and delicious lunch.

Furthermore, when the pan is made of iron or an aluminum alloy which is expensive as compared with aluminum, the user should provide the heater, the pan and the upper lid and the caterer supplies the tray on which the processed foodstuffs put and the inner lid. Thus, the user can always have inexpensive, fresh, warm and healthy lunch.

In addition, the cooking utensil in accordance with the present invention comprises a pan preferably having a step part in the vicinity of inner side upper edge part, a try having at least two steam passing holes in the vicinity of upper edge part of its side wall and arranged in the pan so that its outer peripheral part may be put on the step part of the pan and an upper lid. Thus, it can be used not only as a casserole but also as a steamer for heating the cooking material by dry steam.

In addition, the cooking utensil in accordance with the present invention comprises an outer pot made of a heat insulating material, an inner pot arranged in the outer pot and having an electric heater at its bottom, a try arranged in the inner pot so that its outer peripheral part may be fixed at a peripheral part extending from the upper edge part and having at least two steam passing holes in the vicinity of the upper edge part thereof, and an upper lid covering the upper surface of the tray and the pots. In this structure, when the water in the inner pot is boiled by heat from the electric heater, dry steam enters the space between the tray and the upper lid through the steam passing holes of the tray and a cooking material on the tray is cooked by the dry steam. Alternatively, it comprises an outer pot made of a heat insulating material, an inner pot arranged in the outer pot and having an electric heater at its bottom and a plurality of concave parts at its inner side upper edge part, a tray arranged in the inner pot so that its outer peripheral part extending from the upper edge part may be in contact with an inner side upper edge part of the inner pot and a plurality of steam passing holes may be formed between the tray and the inner pot only at the plurality of concave parts of the inner pot, and an upper lid covering the tray. In this structure, when the water in the inner pot is boiled by heat from the electric heater, dry steam enters the space between the tray and the upper lid through the steam passing holes between the inner pot and the tray and a cooking material on the tray is cooked by the dry steam. Thus, similar to the above, it can be used as a casserole for cooking a stew or the like or as a steamer. In the latter case, the tray on which the cooking material is put is put in the pot and then the upper lid is put thereon. Since the cooking material on the tray can be cooked by dry steam, the frozen foods or the like can be heated up for a very short time without losing its color and taste. In addition, they can be served hot. Furthermore, since the electric heater is used, it is not necessary to prepare the heater or the like. As a result, it is easy to handle and it is possible to provide a sanitary and simple cooking utensil.

In addition, according to the cooking utensil in which the outer peripheral part extending from the upper edge part of the tray comprises the internal peripheral part and the external peripheral part having a step part so as to be formed lower than the internal peripheral part and the upper lid is put on the external peripheral part so that waterdrops generated on the upper lid, when a cooking material on the tray is heated up by dry steam, fall from the holes of the external peripheral part to outside the tray and inside the inner pot, it is prevented that waterdrops are attached to the cooking material during or after cooking and the cooking material is wet, so that color or appearance of the cooking material is not spoiled.

In addition, since the generated steam becomes waterdrops and falls into the inner pot again, water does not immediately evaporate to be lost, so that the cooking material is prevented from being burned.

Although the present invention has been described and illustrated in detail, it is clearly understood that the same is by way of illustration and example only and is not to be taken by way of limitation, the spirit and scope of the present invention being limited only by the terms of the appended claims.

## Claims

1. A cooking utensil comprising:
a pan having a plurality of concave parts formed at the inner side upper edge part of its side wall;
a tray put in said pan such that the outer surface of upper edge part of the tray is in contact with the inner side upper edge part of the side wall of said pan and steam passing holes is formed between the tray and said pan only at the plurality of concave parts of said pan;
an upper lid put on the outer peripheral part extending outward from the upper edge part of said pan so as to cover the space over said pan; and
water in said pan being boiled by heat from said pan and thus generated steam from water being introduced into the space between said tray and said upper lid through said steam passing holes between said pan and said tray, whereby a cooking material on the tray is cooked by dry steam.

2. A cooking utensil comprising:
a pan;
a tray having at least two steam passing holes at its side wall in the vicinity of the upper edge part thereof or at its peripheral part extending outward from the upper edge part;
said tray being placed on said pan so that its outer peripheral part is in contact with the inner wall of said pan in the vicinity of its upper end contour thereof;
an upper lid covering the space over said pan; and
water in said pan being boiled by heat from said pan and thus generated steam from water being introduced into the space between said tray and said upper lid through the steam passing holes of said tray, whereby a cooking material on the tray is cooked by dry steam.

3. A cooking utensil in accordance with claim 1, which further comprises an inner lid put on the outer peripheral part of said pan or the outer peripheral part of said tray.

4. A cooking utensil in accordance with claim 2, which further comprises an inner lid put on the outer peripheral part of said pan or the outer peripheral part of said tray.

5. A cooking utensil in accordance with claim 1, which further comprises a tray supporting member having a desired shape and desired height and placed on the internal bottom of said pan to support said tray.

6. A cooking utensil in accordance with claim 2, which further comprises a tray supporting member having a desired shape and desired height and placed on the internal bottom of said pan to support said tray.

7. A cooking utensil in accordance with claim 1, wherein said pan is made of iron, aluminum, an aluminum alloy, chinaware or a material to which vitreous enamel processing is applied.

8. A cooking utensil in accordance with claim 2, wherein said pan is made of iron, aluminum, an aluminum alloy, chinaware or a material to which vitreous enamel processing is applied.

9. A cooking utensil comprising:
a pot having a heater material buried in its bottom and a tray putting part at its upper contour part;
a tray having at least two steam passing holes at the side wall in the vicinity of upper edge part of its side wall;
said tray being placed on said pan so that its outer peripheral part extending outward from the upper edge part is in contact with said tray putting part of said pot;
an upper lid covering the space over said pot; and
water in said pot being boiled by heat from said heater material and thus generated steam from water being introduced into the space between said tray and said upper lid through said steam passing holes of said tray, whereby a cooking material on the tray is cooked by dry steam.

10. A cooking utensil in accordance with claim 9, wherein said pot comprises an outer pot made of a heat insulating material and an inner pot placed in said outer pot, said inner pot having said heater material buried in its bottom and said tray putting part at its upper contour part.

11. A cooking utensil in accordance with claim 2, wherein said outer peripheral part extending outward from the upper edge part of the tray comprises an internal peripheral part and an external peripheral part, said external peripheral part has a step difference with relative to the internal peripheral part to be lower than the inner part, said external peripheral part has at least two holes, said upper lid is placed on the outer peripheral part of said tray so that waterdrops generated and attached onto the inner surface of the upper lid during heating for cooking fall along the internal surface of said upper lid and fall from the holes of the outer peripheral part down to the space outside the tray and inside the pot.

12. A cooking utensil in accordance with claim 9, wherein said outer peripheral part extending outward from the upper edge part of the tray comprises an internal peripheral part and an external peripheral part, said external peripheral part has a step difference with relative to the internal peripheral part to be lower than the inner part, said external peripheral part has at least two holes, said upper lid is placed on the outer peripheral part of said tray so that waterdrops generated and attached onto the inner surface of the upper lid during heating for cooking fall along the internal surface of said upper lid and fall from the holes of the outer peripheral part down to the space outside the tray and inside the pot.

13. A cooking utensil in accordance with claim 11, wherein said outer peripheral part has at least two convex parts so that the upper lid put thereon is held at a position slightly higher than the surface of said outer peripheral part.

14. A cooking utensil in accordance with claim 12, wherein said outer peripheral part has at least two convex parts so that the upper lid put thereon is held at a position slightly higher than the surface of said outer peripheral part.

15. A cooking utensil comprising:
a pot having a heater material buried in its bottom, a tray putting part at its upper contour part, and a plurality of concave parts formed at the inner side upper edge part of its side wall;
a tray put in said pot so that its outer peripheral part extending outward from the upper edge part of its side wall is in contact with said tray putting part of said pot, the outer surface of the outer peripheral part is in contact with the inner side upper edge part of the side wall of said pot, and steam passing holes are formed between said tray and said pot only at the plurality of concave parts of said pot;
an upper lid covering the upper space of said tray and said pot; and
water in said pot being boiled by heat from said heater material and thus generated steam from water being introduced into the space between said tray and said upper lid through said steam passing holes formed between said pot and said tray, whereby a cooking material on the tray is cooked by dry steam.

16. A cooking utensil in accordance with claim 15, wherein said pot comprises an outer pot made of a heat insulating material and an inner pot placed in said outer pot, said inner pot having said heater material buried in its bottom and said tray putting part at its upper contour part.

17. A cooking utensil in accordance with claim 10, wherein said outer pot is made of a heat resisting resin, said inner pot is made of a material having good heat conductivity and said upper lid is made of a transparent heat resisting material.

18. A cooking utensil in accordance with claim 16, wherein said outer pot is made of a heat resisting resin, said inner pot is made of a material having good heat conductivity and said upper lid is made of a transparent heat resisting material.

19. A cooking utensil in accordance with claim 10, wherein said outer pot has a heat radiating plate at its bottom.

20. A cooking utensil in accordance with claim 16, wherein said outer pot has a heat radiating plate at its bottom.

FIG.1

FIG. 2

FIG.3

FIG.4

FIG. 5

FIG. 6

FIG. 7

F I G.8

FIG. 9

FIG. 10

F I G.11

(a)

(b)

(c)

(d)

(e)

F I G. 12

F I G.13

F I G.14

FIG.15

FIG.16

FIG.17

(a)

(b)